# EUROPEAN PATENT APPLICATION

(11) **EP 3 550 744 A1**
(43) Date of publication of application: **09.10.2019**
(21) Application number: 17879402.0
(22) Date of filing: 01.12.2017
(51) Int. Cl.: H04J 14/02, H04B 10/03, H04B 10/27

(54) **OPTICAL TRANSMISSION DEVICE AND OPTICAL TRANSMISSION METHOD**

(30) Priority: 05.12.2016 JP 2016235494
(71) Applicant: NEC Corporation, Tokyo 108-8001 (JP)
(72) Inventor: KAWAI Motoyoshi, Tokyo 108-8001 (JP)
(74) Representative: Robson, Aidan John
(86) International application number: PCT/JP2017/043229
(87) International publication number: WO 2018/105506

(57) **Abstract**

To address the problem of an increase in the complexity of the structure of a ROADM device using a WSS device when WSS is multiplexed or made redundant, an optical transmission device includes an optical add-drop multiplexer which produces an output by multiplexing/demultiplexing arbitrary wavelengths into or from first signal light and second signal light that are input, and a multiplexer/demultiplexer to which the input of the first signal light and the second signal light is switched, characterized in that the multiplexer/demultiplexer is transmissive to a predetermined wavelength band of the first signal light, and produces an output by multiplexing/demultiplexing the first signal light that has been transmitted and the second signal light.

## Description

### [Technical Field]

The present invention relates to an optical transmission device and an optical transmission method in an optical communication system.

### [Background Art]

In recent years, optical add/drop multiplexing (OADM) devices have been introduced in submarine communication systems using submarine cables. The OADM device is provided in a branching device installed on the seabed, multiplexes and demultiplexes signal light input from a transmission source trunk station and signal light input from a branch station, and outputs resultant signal light to a destination trunk station.

A reconfigurable OADM (ROADM) device has been used in order that change in a network configuration after operation start is dealt with without pulling, to the land, a branching device provided with an OADM device. Japanese Unexamined Patent Application Publication No. 2010-098545 discloses an ROADM device using an optical add/drop multiplexing device (hereinafter, referred to as a wavelength selective switch (WSS)). A WSS is a wavelength selection device that has three functions of "demultiplexing" of separating an input optical signal by the wavelength, "switching" for selecting a demultiplexed optical signal, and "multiplexing" of the selected optical signals.

A wavelength selection device such as a WSS is constituted of an optical element such as micro electro mechanical systems (MEMS) that switch a wavelength or a liquid crystal on silicon (LCOS), an optical component such as a lens making optical coupling between a wavelength switching element and a fiber, and an electronic circuit that controls a wavelength selection element. Thus, in the wavelength selection device such as a WSS, there is a problem of the complicated structure and the high malfunction rate.

As a means for resolving this problem, NPL 1 discloses a configuration in which multiple or redundant WSSs are used.

### [Citation List]

### [Patent Literature]

PTL 1: Japanese Unexamined Patent Application Publication No. 2010-098545

### [Non Patent Literature]

NPL 1: Jose Chesnoy, et al., "Undersea Fiber Communication Systems 2nd Edition" p. 445

### [Summary of Invention]

### [Technical Problem]

When multiple or redundant WSSs are used as in the invention of NPL 1, the number of components further increases. In addition, a circuit that controls the WSS including a redundant part is also required. Accordingly, there is a problem that a structure of an ROADM device using a WSS device is further complicated.

An object of the present invention is to provide an optical transmission device and an optical transmission method that facilitate the achievement of a structure having WSS redundancy.

### [Solution to Problem]

An optical transmission device according to the present invention includes: an optical add/drop multiplexing device that multiplexes and demultiplexes arbitrary wavelengths of first signal light and second signal light to be input, and outputs resultant signal light; and a multiplexing-demultiplexing device configured to be an switching destination of input of the first signal light and the second signal light, wherein the multiplexing-demultiplexing device transmits a predetermined wavelength band of the first signal light, multiplexes transmitted first signal light and the second signal light, and outputs resultant signal light.

An optical transmission method according to the present invention includes: switching an input destination of first signal light and second signal light from an optical add/drop multiplexing device to a multiplexing-demultiplexing device; transmitting a predetermined wavelength band of the first signal light; and multiplexing transmitted first signal light and the second signal light; and outputting resultant signal light.

### [Advantageous Effects of Invention]

According to the present invention, in an optical transmission device using a WSS, a simple structure can be provided while imparting redundancy.

### [Brief Description of Drawings]

FIG. 1 is a diagram illustrating a configuration example of an optical transmission device according to a first example embodiment.
FIG. 2 is a diagram illustrating a configuration example of the optical transmission device according to the first example embodiment.
FIG. 3 is a diagram illustrating a configuration example of the optical transmission device according to the first example embodiment.
FIG. 4 is a flowchart illustrating an operation example of the optical transmission device according to the first example embodiment.
FIG. 5 is a diagram illustrating a configuration example of an optical transmission device according to a second example embodiment.
FIG. 6 is a diagram illustrating a configuration example of the optical transmission device according to the second example embodiment.
FIG. 7 is a diagram illustrating a configuration example of a multiplexing-demultiplexing device according to the second example embodiment.
FIG. 8 is a flowchart illustrating an operation example of the optical transmission device according to the second example embodiment.
FIG. 9 is a flowchart illustrating an operation example of a WSS according to the second example embodiment.
FIG. 10 is a flowchart illustrating an operation example of the multiplexing-demultiplexing device according to the second example embodiment.
FIG. 11 is a diagram illustrating a configuration example of an optical transmission device according to a third example embodiment.
FIG. 12 is a diagram illustrating a configuration example of the optical transmission device according to the third example embodiment.
FIG. 13 is a diagram illustrating a configuration example of the optical transmission device according to the third example embodiment.
FIG. 14 is a diagram illustrating a configuration example of the optical transmission device according to the third example embodiment.
FIG. 15 is a flowchart illustrating an operation example of the optical transmission device according to the third example embodiment.
FIG. 16 is a diagram illustrating a configuration example of an optical transmission device according to a fourth example embodiment.
FIG. 17 is a diagram illustrating a configuration example of the optical transmission device according to the fourth example embodiment.
FIG. 18 is a diagram illustrating a configuration example of the optical transmission device according to the fourth example embodiment.
FIG. 19 is a flowchart illustrating an operation example of the optical transmission device according to the fourth example embodiment.

### [Example Embodiment]

Next, example embodiments of the present invention are described in detail with reference to the drawings.

### [First Example Embodiment]

### [Configuration]

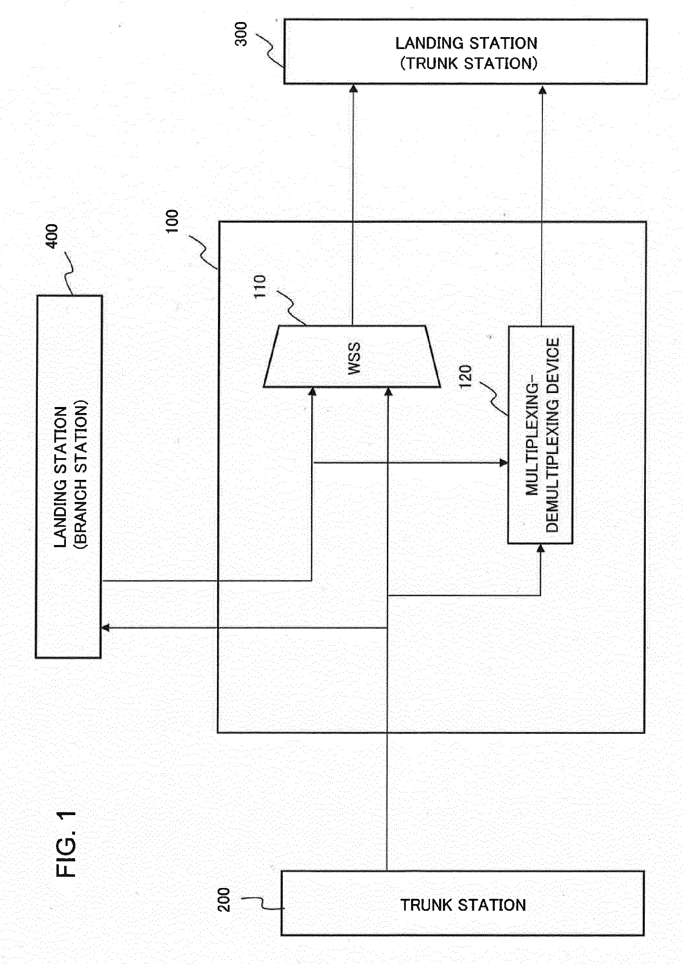

FIG. 1 illustrates a configuration example of an optical transmission device according to a first example embodiment of the present invention. According to FIG. 1, the optical transmission device 100 includes a WSS 110 and a multiplexing-demultiplexing device 120. The optical transmission device 100 is connected to trunk stations 200, 300 and a branch station 400, and receives signal light input therefrom. In FIG. 1, a path of signal light input from a side (upstream direction) of the trunk station 200 is indicated by an arrow. Signal light input from a side (downstream direction) of the trunk station 300, and a WSS and a multiplexing-demultiplexing device provided at a path of the light signal are the same as in the case of the upstream direction, and thus are not illustrated in the drawing.

The WSS 110 multiplexes and demultiplexes, in an arbitrary wavelength band, signal light (first signal light) input from the trunk station and signal light (second signal light) input from the branch station, and outputs the resultant signal light. The "arbitrary wavelength band" means a wavelength band that can be appropriately changed after the optical transmission device 100 is installed.

The multiplexing-demultiplexing device 120 transmits a predetermined wavelength band of the first signal light, multiplexes the transmitted first signal light and the second signal light, and outputs the resultant signal light. The "predetermined wavelength band" means a wavelength band that was set in advance at the time of installation of the optical transmission device 100. Unlike the WSS 110, for changing a wavelength band after installation of the optical transmission device 100, the multiplexing-demultiplexing device 120 needs to be changed in device design. The optical transmission device 100 is used as a branching device of a submarine cable for example, and is installed on the seabed. For this reason, it is difficult to change the predetermined wavelength band of the multiplexing-demultiplexing device 120 installed on the seabed. Meanwhile, the multiplexing-demultiplexing device 120 can be implemented with a structure simpler than that of the WSS 110. Note that in the present example embodiment, for simplicity of description, it is assumed that the predetermined wavelength band transmitted through the multiplexing-demultiplexing device 120 corresponds to an arbitrary wavelength band multiplexed and demultiplexed by the WSS 110.

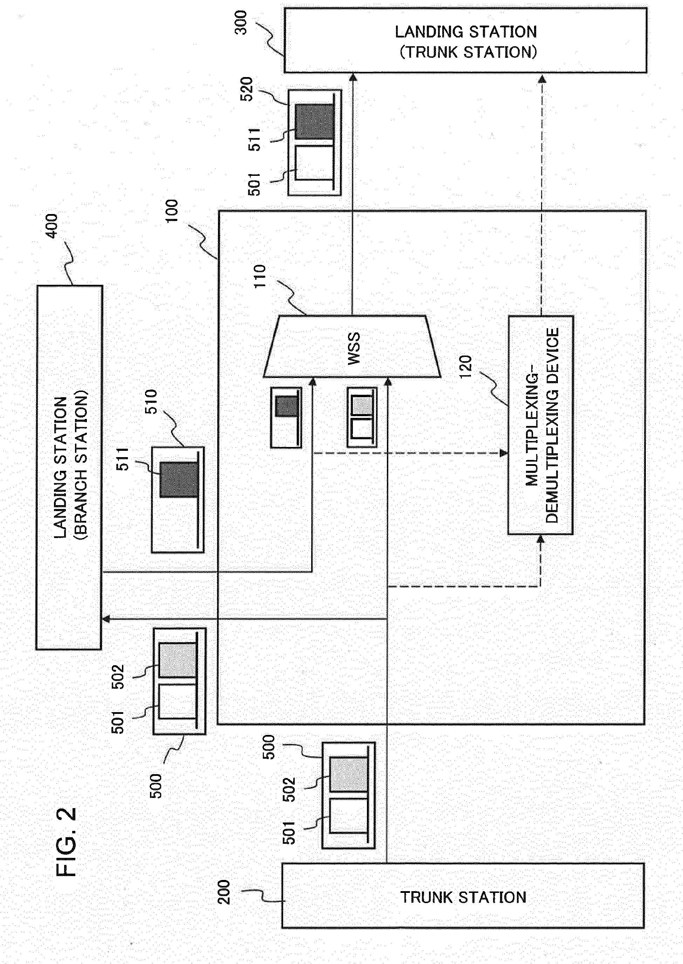

FIG. 2 illustrates a configuration in which first signal light 500 and second signal light 510 are input to the WSS 110. Each of the first signal light and the second signal light is divided into a first wavelength band and a second wavelength band. The first signal light 500 includes a band signal 501 that is signal light in the first wavelength band and a band signal 502 that is signal light in the second wavelength band. The second signal light 510 includes only a band signal 511 that is signal light in the second wavelength band. The WSS 110 transmits the band signal 501 in the first signal light 500, and blocks the band signal 502. The WSS 110 multiplexes the transmitted band signal 501 and the band signal 511 in the second signal light 510. The WSS 110 outputs third signal light 520 in which the band signal 501 and the band signal 511 are multiplexed.

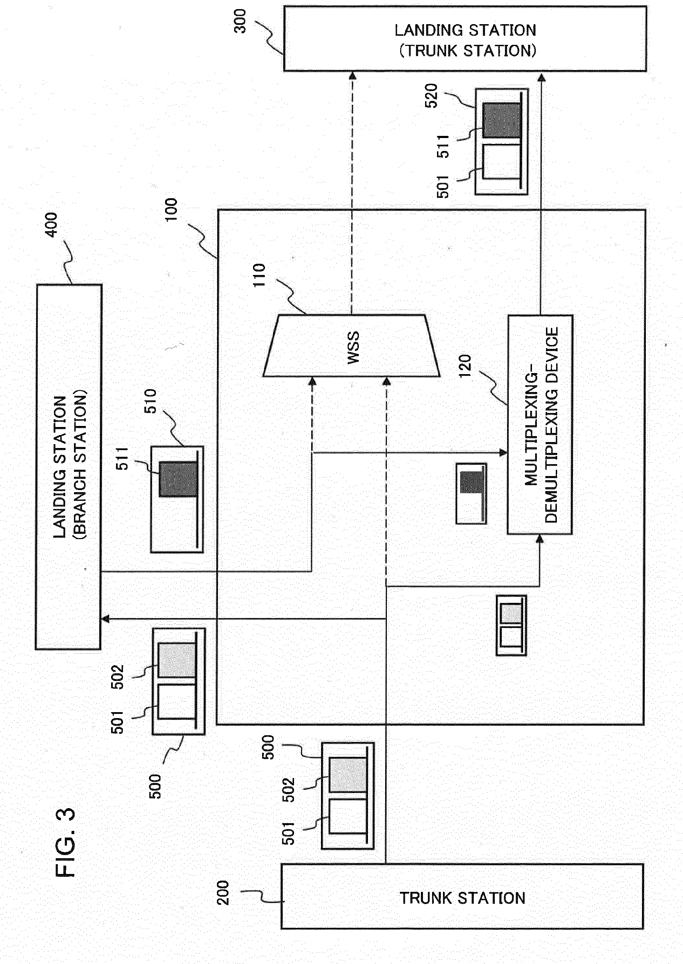

FIG. 3 illustrates a configuration in which an input destination of the first signal light 500 and the second signal light 510 is switched to the multiplexing-demultiplexing device 120. As a result, the first signal light 500 and the second signal light 510 are input to the multiplexing-demultiplexing device 120. The multiplexing-demultiplexing device 120 transmits the band signal 501 in the first signal light 500, and blocks the band signal 502. The multiplexing-demultiplexing device 120 multiplexes the transmitted band signal 501 and the band signal 511 in the second signal light 510. The multiplexing-demultiplexing device 120 outputs third signal light 520 in which the band signal 501 and the band signal 511 are multiplexed.

### [Operation]

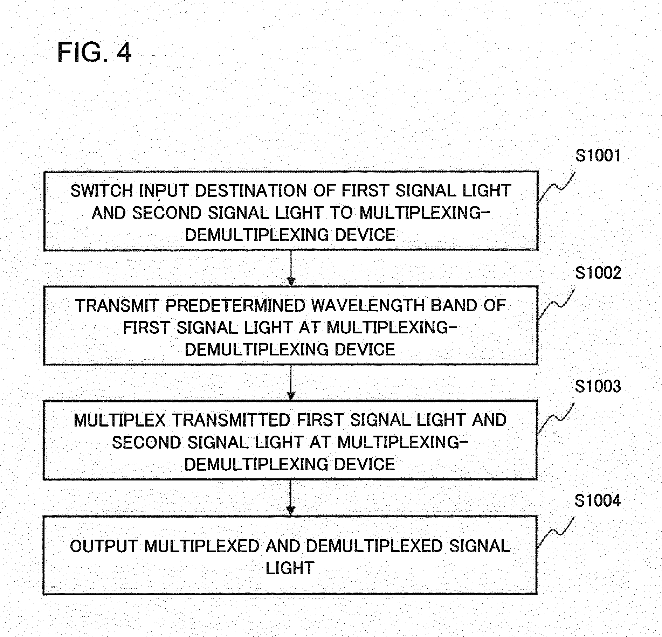

Hereinafter, an operation of the optical transmission device 100 in the first example embodiment is described by using a flowchart in FIG. 4. FIG. 4 illustrates the operation when the first signal light 500 and the second signal light 510 input to the optical transmission device 100 are input to the multiplexing-demultiplexing device 120.

It is assumed that an input destination of the first signal light 500 and the second signal light 510 is the WSS 110. First, an input destination of the first signal light 500 and the second signal light 510 is switched to the multiplexing-demultiplexing device 120 (S1001).

Next, the multiplexing-demultiplexing device 120 transmits the predetermined wavelength band (band signal 501) in the first signal light 500 (S1002).

The multiplexing-demultiplexing device 120 multiplexes the transmitted first signal light (band signal 501) and the second signal light 510 (S1003).

The multiplexing-demultiplexing device 120 outputs the multiplexed and demultiplexed signal light 520 (S1004).

### [Advantageous Effect]

As described above, according to the first example embodiment, in the optical transmission device using the WSS, the multiplexing-demultiplexing device is provided in preparation for a case where the WSS malfunctions. Further, the multiplexing-demultiplexing device can perform control only in the predetermined wavelength band, and meanwhile, can be implemented with a simple structure. For this reason, it is possible to provide a simple structure while retaining WSS redundancy in the optical transmission device.

### [Second Example Embodiment]

### [Configuration]

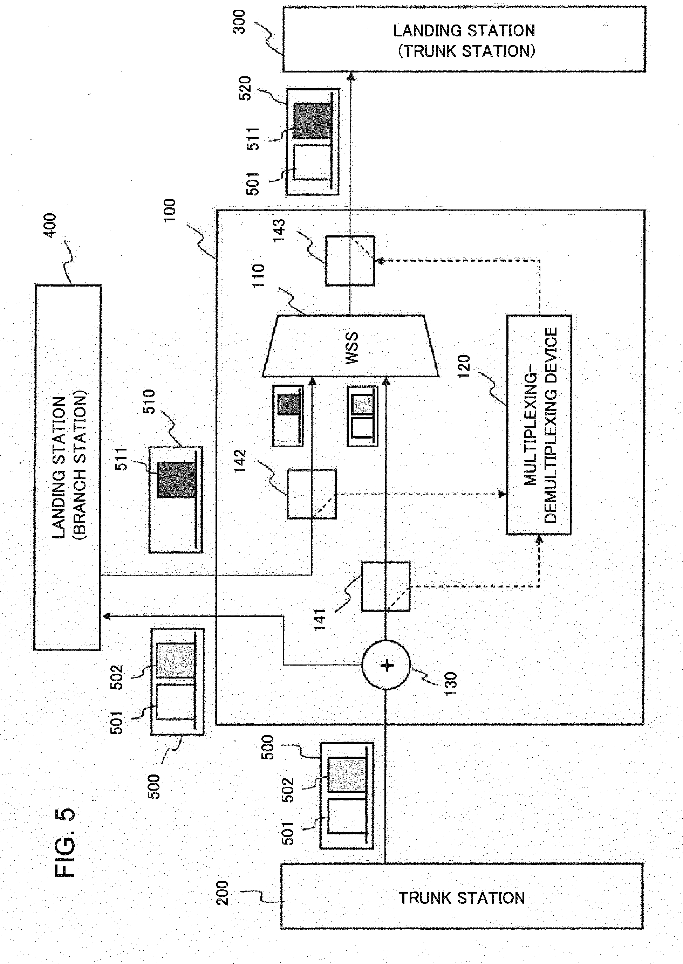

FIG. 5 illustrates a configuration example of an optical transmission device according to a second example embodiment of the present invention. According to FIG. 5, the optical transmission device 100 includes a WSS 110, a multiplexing-demultiplexing device 120, an optical coupler 130, and optical switches 141, 142, and 143. Signal light input to the optical transmission device 100 is similar to that in the first example embodiment. Accordingly, the same reference signs are attached thereto, and detailed description thereof is omitted.

The optical coupler 130 splits the first signal light 500 input from the trunk station 200. The optical coupler 130 outputs the split first signal light 500 to the optical switch 141 and the branch station 400.

The optical switches 141 and 142 are connected to the WSS 110 and the multiplexing-demultiplexing device 120. The optical switches 141 and 142 can each switch an output destination of signal light to either the WSS 110 or the multiplexing-demultiplexing device 120.

The optical switch 143 is connected to the WSS 110 and the multiplexing-demultiplexing device 120. The optical switch 143 can switch an input source of signal light to either the WSS 110 or the multiplexing-demultiplexing device 120.

FIG. 5 illustrates a configuration example when the WSS 110 does not malfunction. For the optical switches 141 and 142, output destinations of signal light are set to the WSS 110. For the optical switch 143, an input source of signal light is set to the WSS 110.

The first signal light 500 and the second signal light 510 are input to the WSS 110. The WSS 110 multiplexes and demultiplexes the input first signal light 500 and second signal light 510 in an arbitrary wavelength band. As a result, the WSS 110 outputs third signal light 520 to the optical switch 143.

The optical switch 143 outputs, to a trunk station 300, the third signal light 520 input from the WSS 110.

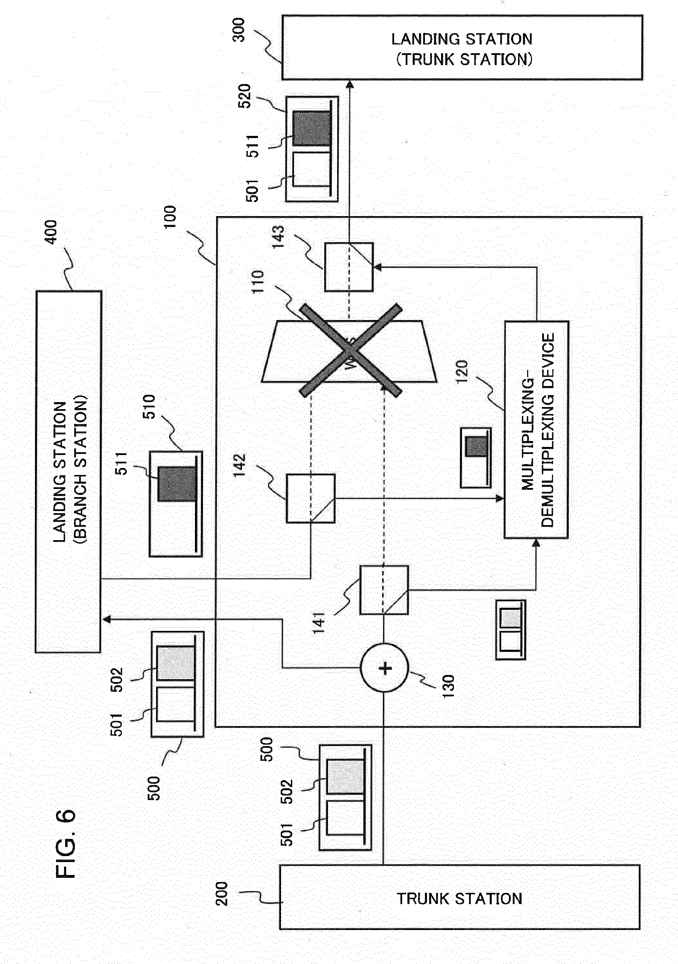

FIG. 6 illustrates a configuration in which an input destination of the first signal light 500 and the second signal light 510 is switched to the multiplexing-demultiplexing device 120 when the WSS 110 malfunctions. As compared with FIG. 5, the difference is that in the optical switches 141 and 142, output destinations of signal light have been switched from the WSS 110 to the multiplexing-demultiplexing device 120. Further, the difference is that in the optical switch 143, an input source of signal light has been switched from the WSS 110 to the multiplexing-demultiplexing device 120. Note that FIG. 6 illustrates an example of the case where the WSS 110 malfunctions, but not limited thereto. As described in the first example embodiment, even when the WSS 110 does not malfunction, in the optical switches 141, 142, and 143, output destinations or an input source of signal light can be switched from the WSS 110 to the multiplexing-demultiplexing device 120.

The optical switch 141 outputs the input signal light 500 to the multiplexing-demultiplexing device 120. The optical switch 142 outputs the input signal light 510 to the multiplexing-demultiplexing device 120.

The first signal light 500 and the second signal light 510 are input to the multiplexing-demultiplexing device 120. The multiplexing-demultiplexing device 120 multiplexes and demultiplexes the input first signal light 500 and second signal light 510 by the predetermined wavelength band. As a result, the multiplexing-demultiplexing device 120 outputs the third signal light 520 to the optical switch 143.

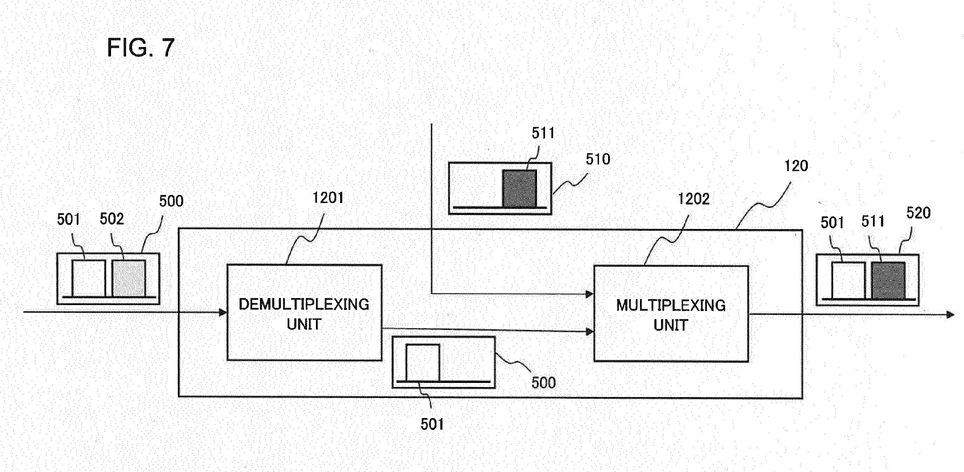

FIG. 7 illustrates a configuration of the multiplexing-demultiplexing device 120. According to FIG. 7, the multiplexing-demultiplexing device 120 is constituted by a demultiplexing unit 1201 and a multiplexing unit 1202.

The demultiplexing unit 1201 transmits a predetermined wavelength band of input signal light. According to FIG. 7, the first signal light 500 is input to the demultiplexing unit 1201. The demultiplexing unit 1201 transmits a band signal 501 in the first signal light 500, and blocks a band signal 502.

The multiplexing unit 1202 multiplexes input signal light. The multiplexing unit 1202 outputs the multiplexed signal light. According to FIG. 7, the first signal light 500 transmitted through the demultiplexing unit 1201 and the second signal light 510 are input to the multiplexing unit 1202. According to FIG. 7, the multiplexing unit 1202 multiplexes the band signal 501 in the first signal light 500 transmitted through the demultiplexing unit 1201 and a band signal 511 in the second signal light 510. The multiplexing unit 1202 outputs the third signal light 520 in which the band signal 501 and the band signal 511 are multiplexed.

Referring back to FIG. 6, the optical switch 143 outputs, to the trunk station 300, the third signal light 520 input from the multiplexing-demultiplexing device 120.

### [Operation]

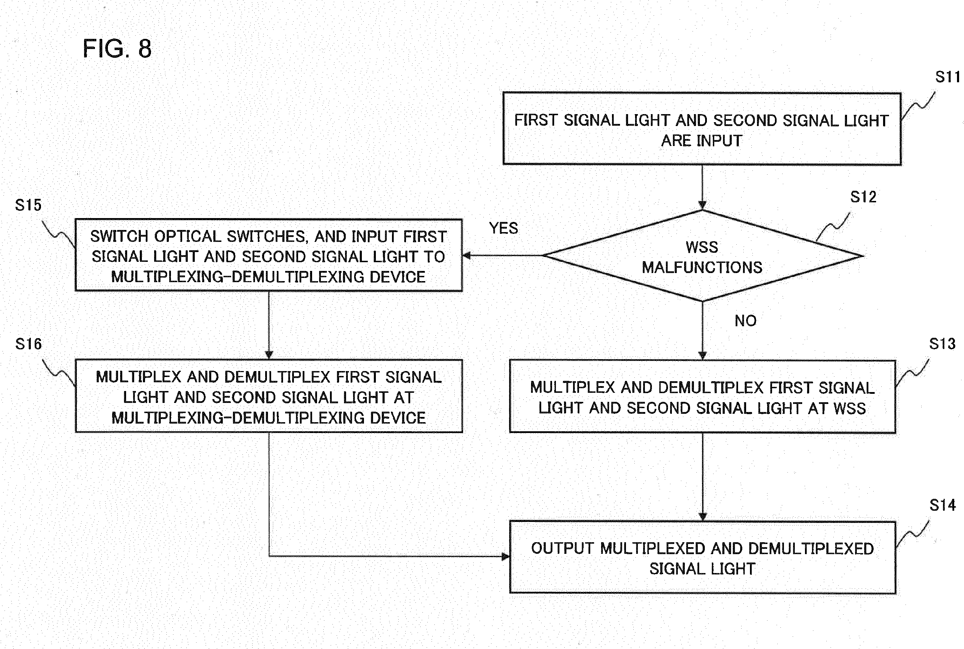

By using a flowchart of FIG. 8, an operation of the optical transmission device 100 in the second example embodiment is described. FIG. 8 illustrates the operation when an input destination of the first signal light 500 and the second signal light 510 input to the optical transmission device 100 is switched to either the WSS 110 or the multiplexing-demultiplexing device 120.

First, the first signal light 500 and the second signal light 510 are input to the optical transmission device 100 from the trunk station 200 and the branch station 400, respectively (S11).

When the WSS 110 does not malfunction (no at S12), the WSS 110 multiplexes and demultiplexes the first signal light 500 and the second signal light 510 (S13).

The optical transmission device 100 outputs the third signal light 520 that is the signal light multiplexed and demultiplexed by the WSS 110 (S14).

When the WSS 110 malfunctions (yes at S12), the optical switches 141 and 142 are switched, and the first signal light 500 and the second signal light 510 are input to the multiplexing-demultiplexing device 120 (S15).

The multiplexing-demultiplexing device 120 multiplexes and demultiplexes the first signal light 500 and the second signal light 510 (S16).

The optical transmission device 100 outputs the third signal light 520 that is the signal light multiplexed and demultiplexed by the multiplexing-demultiplexing device 120 (S14).

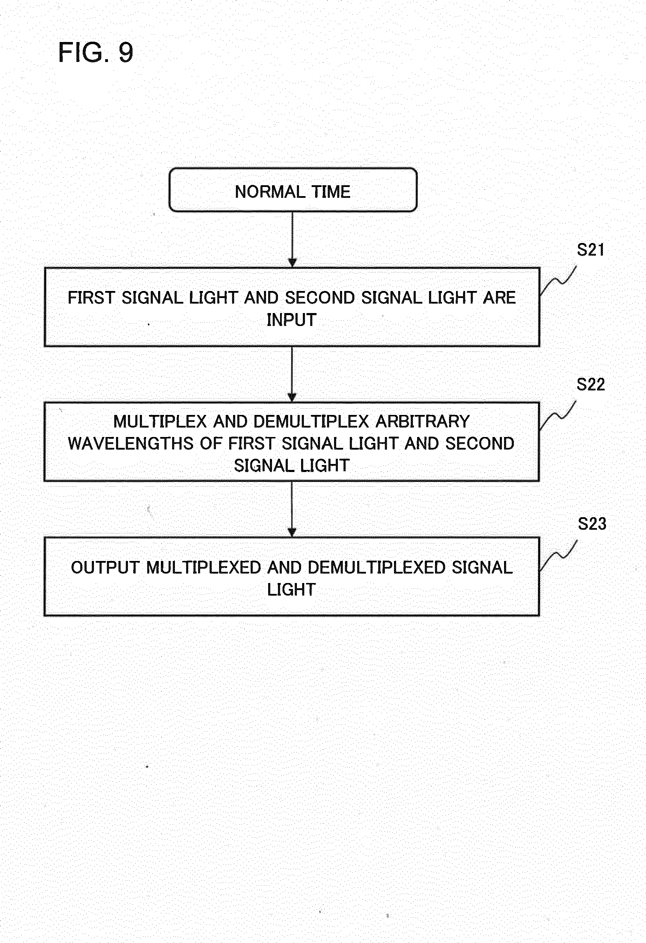

An operation of the WSS 110 is described by using a flowchart in FIG. 9.

When the WSS 110 does not malfunction, the first signal light 500 and the second signal light 510 are input to the WSS 110 (S21).

Next, the WSS 110 multiplexes and demultiplexes arbitrary wavelengths of the first signal light 500 and the second signal light 510 (S22).

The WSS 110 outputs the third signal light 520 that is the multiplexed and demultiplexed signal light (S23).

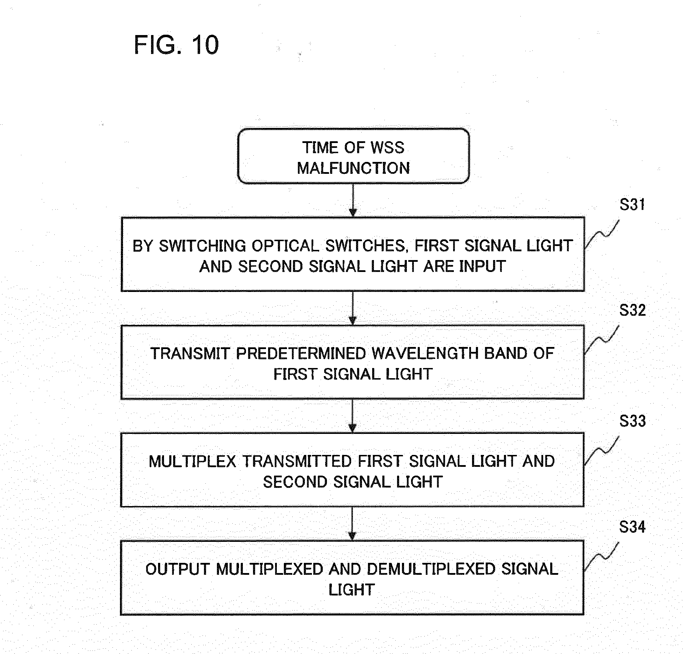

An operation of the multiplexing-demultiplexing device 120 is described by using a flowchart in FIG. 10.

When the WSS 110 malfunctions, the first signal light 500 and the second signal light 510 are input respectively to the demultiplexing unit 1201 and the multiplexing unit 1202 of the multiplexing-demultiplexing device 120 (S31).

The demultiplexing unit 1201 transmits the predetermined wavelength band of the first signal light 500 (S32). In other words, the demultiplexing unit 1201 transmits the band signal 501.

The multiplexing unit 1202 multiplexes the transmitted band signal 501 and the second signal light 510 (S33). In other words, the multiplexing unit 1202 multiplexes the band signal 501 and the band signal 511.

The multiplexing-demultiplexing device 120 outputs the third signal light 520 that is the multiplexed and demultiplexed signal light (S34).

### [Advantageous Effect]

As described above, according to the second example embodiment, switching the optical switches enables an input destination of signal light to be changed to the multiplexing-demultiplexing device when the WSS malfunctions. Thus, even when the WSS malfunctions, signal light can be output via the multiplexing-demultiplexing device without disconnection. Further, the multiplexing-demultiplexing device can be implemented by providing the demultiplexing unit and the multiplexing unit. Accordingly, as compared with a WSS having not only a multiplexing-demultiplexing function but also a switching function and the like, the multiplexing-demultiplexing device has a simpler structure in which the number of components is smaller. Thus, a structure of the entire optical transmission device can also be a simple structure with a small number of components.

### [Third Example Embodiment]

### [Configuration]

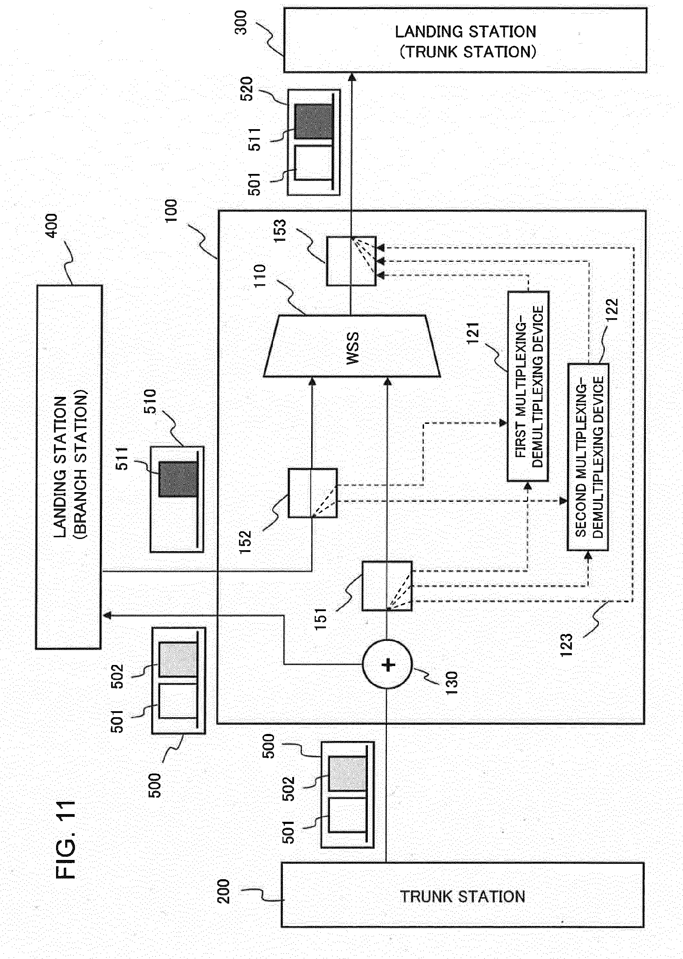

FIG. 11 illustrates a configuration example of an optical transmission device according to a third example embodiment of the present invention. In the third example embodiment, a plurality of multiplexing-demultiplexing devices and a through-fiber are provided as switching destinations of input of signal light.

According to FIG. 11, the optical transmission device 100 includes the WSS 110, a first multiplexing-demultiplexing device 121, a second multiplexing-demultiplexing device 122, a through-fiber 123, an optical coupler 130, and optical switches 151, 152, and 153. Signal light input to the optical transmission device 100 is similar to that in the first example embodiment, and thus, the same reference signs are attached thereto, and detailed description thereof is omitted. For constituents similar to those in the first and second example embodiments, the same reference signs are attached thereto, and detailed description thereof is omitted.

Predetermined wavelength bands transmitted through the first multiplexing-demultiplexing device 121 and the second multiplexing-demultiplexing device 122 are different from each other. An operation in which the first multiplexing-demultiplexing device 121 and the second multiplexing-demultiplexing device 122 multiplex and demultiplex input signal light and output resultant signal light is similar to that of the multiplexing-demultiplexing device 120 in the first and second example embodiments. The first multiplexing-demultiplexing device 121 and the second multiplexing-demultiplexing device 122 can be each implemented with a configuration similar to that of the multiplexing-demultiplexing device 120 of the second example embodiment.

The through-fiber 123 is an optical line that does not have a multiplexing-demultiplexing function. The signal light input to the through-fiber 123 is output as it is without being blocked.

The optical switch 151 is connected to the WSS 110, the first multiplexing-demultiplexing device 121, the second multiplexing-demultiplexing device 122, and the through-fiber 123. The optical switch 152 is connected to the WSS 110, the first multiplexing-demultiplexing device 121, and the second multiplexing-demultiplexing device 122. In the optical switches 151 and 152, output destinations of signal light can be switched to one of the connection destinations.

The optical switch 153 is connected to the WSS 110, the first multiplexing-demultiplexing device 121, the second multiplexing-demultiplexing device 122, and the through-fiber 123. In the optical switch 153, an input source of signal light can be switched to one of the connection destinations.

FIG. 11 illustrates a configuration example when the WSS 110 does not malfunction. At this time, in the optical switches 151 and 152, output destinations of signal light are set to the WSS 110. In the optical switch 153, an input source of signal light is set to the WSS 110.

The first signal light 500 and the second signal light 510 are input to the WSS 110. The WSS 110 multiplexes and demultiplexes the input first signal light 500 and second signal light 510 in an arbitrary wavelength band. As a result, the WSS 110 outputs the third signal light 520 to the optical switch 153.

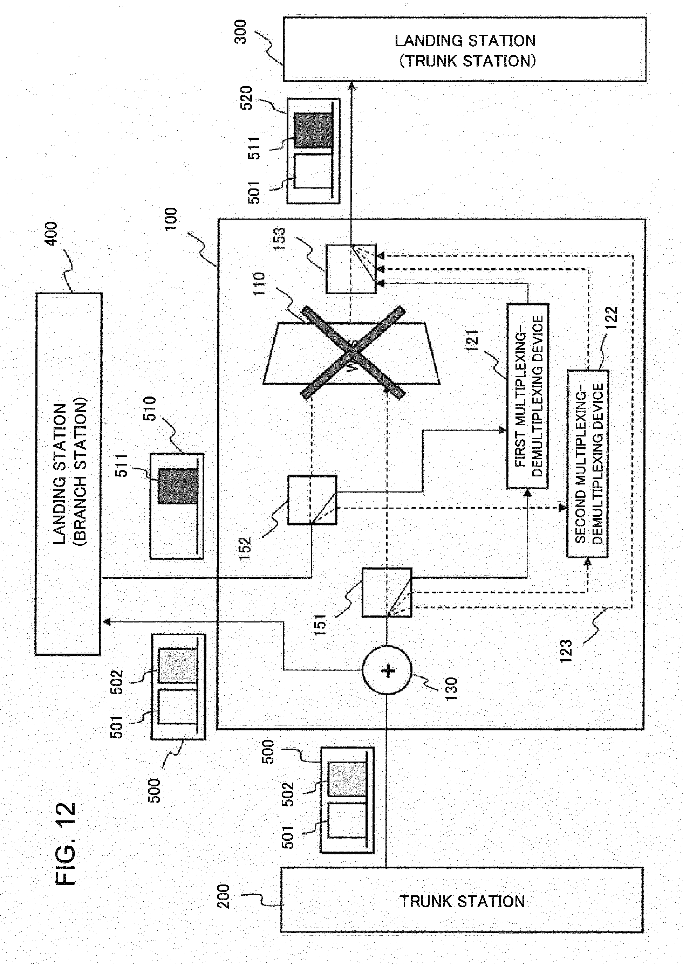

FIG. 12 illustrates a configuration in which an input destination of the first signal light 500 and the second signal light 510 is switched to the first multiplexing-demultiplexing device 121 when the WSS 110 malfunctions. As compared with FIG. 11, the difference is that in the optical switches 151 and 152, output destinations of signal light have been switched to the first multiplexing-demultiplexing device 121. Further, the difference is that in the optical switch 153, an input source of signal light has been switched to the first multiplexing-demultiplexing device 121.

The predetermined wavelength band transmitted through the first multiplexing-demultiplexing device 121 corresponds to the wavelength band of the band signal 501. The first signal light 500 and the second signal light 510 are input to the first multiplexing-demultiplexing device 121. The first multiplexing-demultiplexing device 121 multiplexes and demultiplexes the input first signal light 500 and second signal light 510, and outputs the third signal light 520.

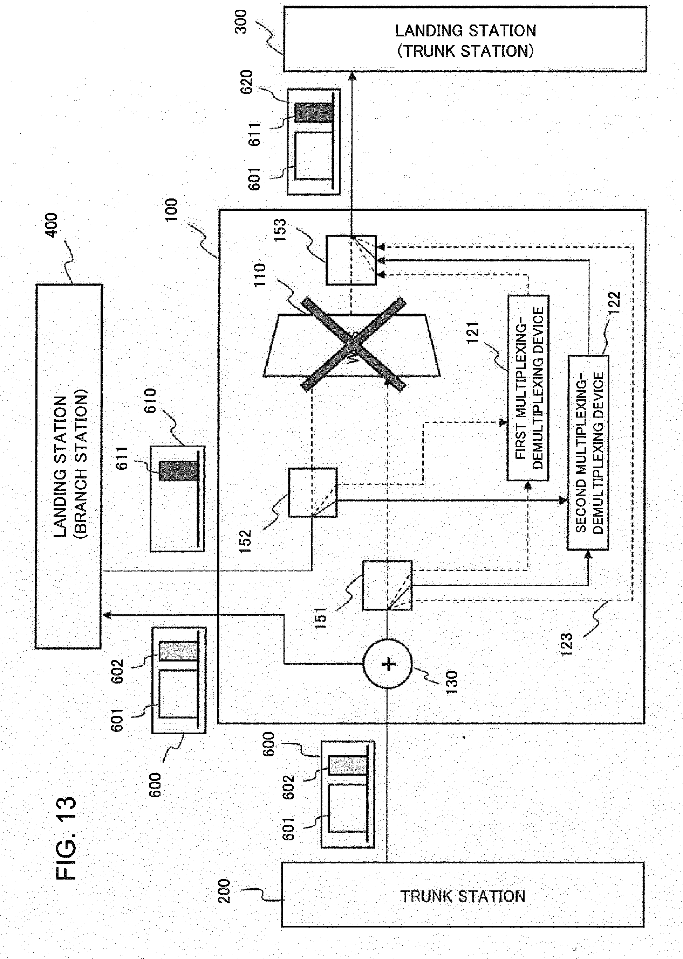

Next, by using FIG. 13, description is made on a configuration example when wavelength bands of band signals constituting signal light input to the optical transmission device 100 are different from those of the signal light illustrated in FIG. 12. Bandwidths of a first wavelength band and a second wavelength band of first signal light 600 and second signal light 610 illustrated in FIG. 13 are different from those of the signal light illustrated in FIGS. 11 and 12.

FIG. 13 illustrates a configuration in which an input destination of the first signal light 600 and the second signal light 610 is switched to the first multiplexing-demultiplexing device 122 when the WSS 110 malfunctions. As compared with FIG. 11, the difference is that in the optical switches 151 and 152, output destinations of signal light have been switched to the second multiplexing-demultiplexing device 122. Further, the difference is that in the optical switch 153, an input source of signal light has been switched to the second multiplexing-demultiplexing device 122.

The bandwidths of the first wavelength band and the second wavelength band of the first signal light 600 and the second signal light 610 are different from those of the first signal light 500 and the second signal light 510 in FIG. 11. The first signal light 600 includes a band signal 601 that is signal light in the first wavelength band and a band signal 602 that is signal light in the second wavelength band. The second signal light 610 includes only a band signal 611 that is signal light in the second wavelength band.

Since the predetermined wavelength band transmitted through the first multiplexing-demultiplexing device 121 corresponds to the wavelength band of the band signal 501, the band signal 601 cannot pass through because of its bandwidth. Meanwhile, the predetermined wavelength band transmitted through the second multiplexing-demultiplexing device 122 corresponds to the wavelength band of the band signal 601. The first signal light 600 and the second signal light 610 are input to the second multiplexing-demultiplexing device 122. The second multiplexing-demultiplexing device 122 multiplexes and demultiplexes the input first signal light 600 and second signal light 610, and outputs third signal light 620.

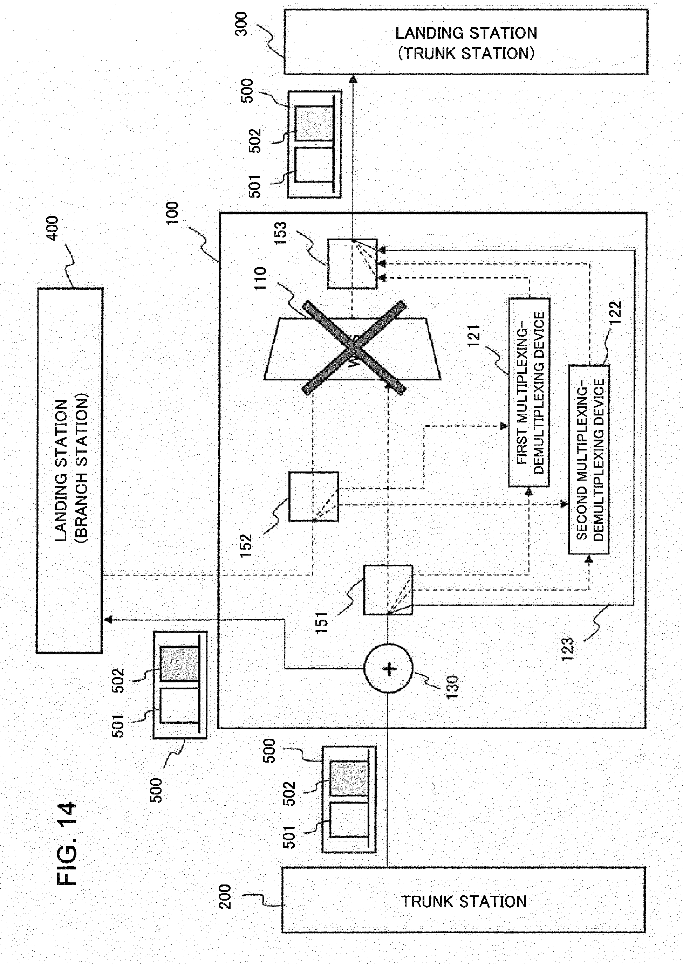

FIG. 14 illustrates a configuration in which an input destination of the first signal light 500 is switched to the through-fiber 123 when the WSS 110 malfunctions. As compared with FIG. 11, the difference is that in the optical switch 151, an output destination of signal light has been switched to the through-fiber 123. Further, the difference is that in the optical switch 153, an input source of signal light has been switched to the through-fiber 123.

The first signal light 500 is input to the through-fiber 123. The first signal light 500 input to the through-fiber 123 is transmitted without being blocked, and is output to the optical switch 153.

### [Operation]

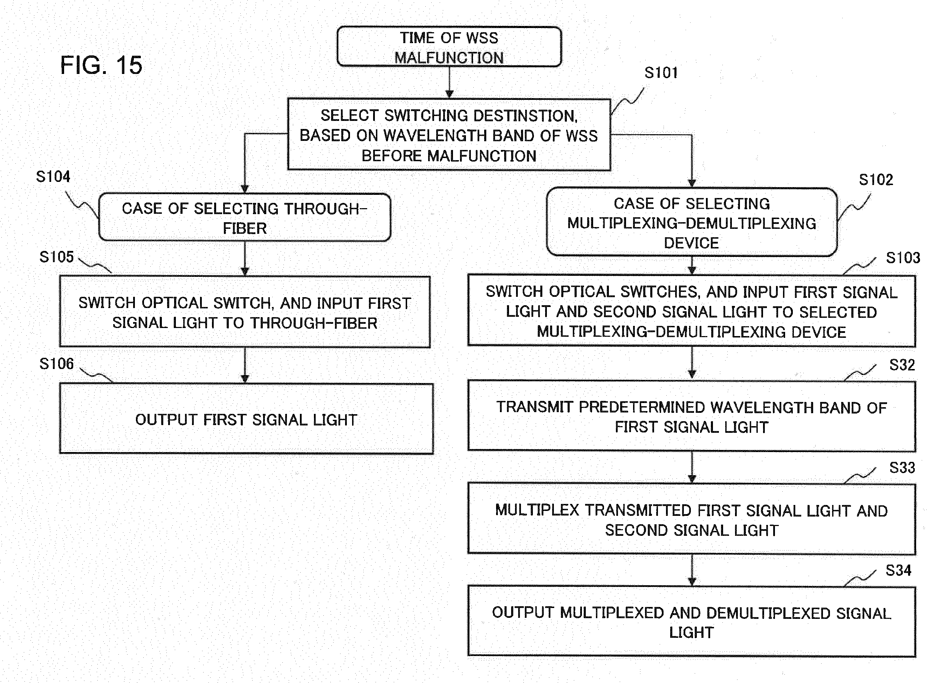

Hereinafter, an operation of the third example embodiment is described by using a flowchart in FIG. 15. FIG. 15 illustrates an operation of the optical transmission device 100 when the WSS 110 malfunctions.

The optical transmission device 100 selects a switching destination from the first multiplexing-demultiplexing device 121, the second multiplexing-demultiplexing device 122, and the through-fiber 123 (S101), based on the wavelength band of the WSS 110 before the malfunction.

When one of the first multiplexing-demultiplexing device 121 and the second multiplexing-demultiplexing device 122 is selected as a switching destination (S102), the optical switches 151 and 152 are switched, and the first signal light and the second signal light are input to the selected multiplexing-demultiplexing device (S103). The process from input of the first signal light and the second signal light to the multiplexing-demultiplexing device to output of the third signal light is similar to those of the first and second example embodiments, and thus, detailed description thereof is omitted.

When the through-fiber 123 is selected as a switching destination (S104), the optical switch 151 is switched, and the first signal light is input to the through-fiber 123 (S105). The input first signal light is output to the optical switch 153 (S106).

### [Advantageous Effect]

As described above, according to the third example embodiment, switching the optical switches enables an input destination of signal light to be changed to the multiplexing-demultiplexing device when the WSS malfunctions. Further, by providing a plurality of the multiplexing-demultiplexing devices whose predetermined wavelength bands are different from each other, it is possible to select the multiplexing-demultiplexing device that performs multiplexing and demultiplexing in a wavelength band closer to a wavelength band in which multiplexing and demultiplexing is performed by the WSS before malfunctioning. Thereby, communication can be performed in a wavelength band closer to that of the WSS before the WSS malfunctions. Furthermore, by providing the through-fiber, it is also possible to adopt a method in which signal light from the trunk station can be communicated without being blocked.

Note that FIGS. 12, 13, and 14 illustrate examples of the case where the WSS 110 malfunctions, but not limited thereto. As described in the first example embodiment, even when the WSS 110 does not malfunction, in the optical switches 151, 152, and 153, output destinations or an input source of signal light can be switched.

### [Fourth Example Embodiment]

### [Configuration]

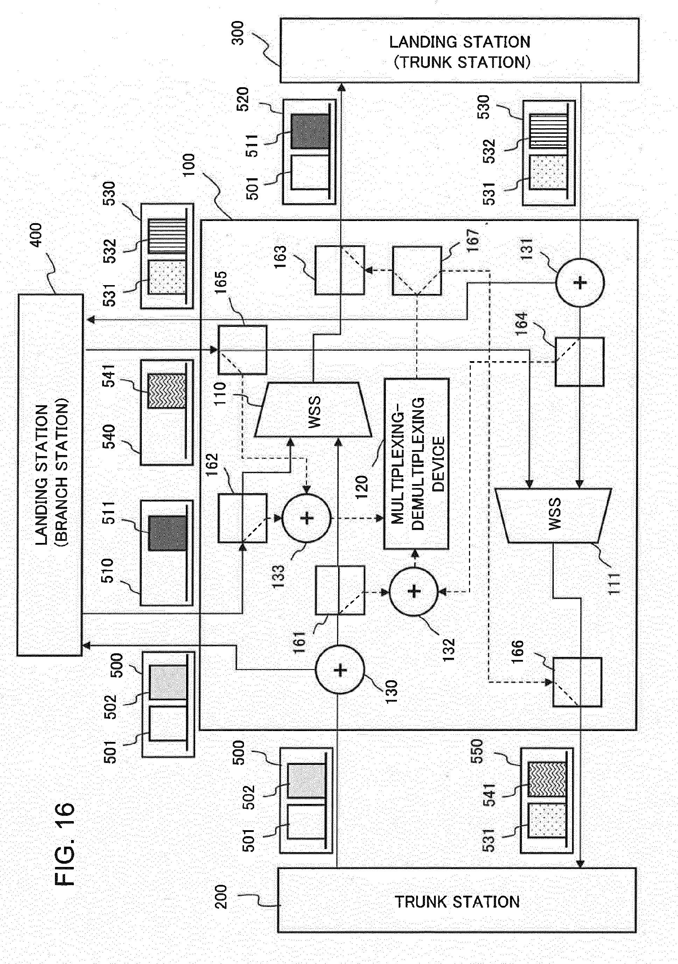

FIG. 16 illustrates a configuration example of an optical transmission device according to a fourth example embodiment of the present invention. In the fourth example embodiment, a multiplexing-demultiplexing device is a switching destination of input upstream signal light and input downstream signal light.

According to FIG. 16, the optical transmission device 100 includes WSSs 110 and 111, the multiplexing-demultiplexing device 120, optical couplers 130 to 133, and optical switches 161 to 167. For constituents similar to those in the first to third example embodiments, the same reference signs are attached thereto, and detailed description thereof is omitted.

To the optical transmission device 100, the first signal light 500 and the second signal light 510 are input from an upstream side. Further, to the optical transmission device 100, first signal light 530 and second signal light 540 are input from a downstream side. It is assumed that the signal light 500, 510, 530, and 540 have the corresponding bandwidths of the first wavelength band and the second wavelength band.

The WSS 110, the optical coupler 130, and the optical switches 161, 162, and 163 are devices provided on a path of signal light input from the upstream side. The WSS 111, the optical coupler 131, and the optical switches 164, 165, and 166 are devices provided on a path of signal light input from the downstream side. The optical couplers 132 and 133 and the optical switch 167 are devices provided on both of the upstream and downstream paths.

The optical switch 161 is connected to the WSS 110 and the optical coupler 132. The optical switch 162 is connected to the WSS 110 and the optical coupler 133. The optical switch 163 is connected to the WSS 110 and the optical switch 167. In each of the optical switches, an output destination or an input source of signal light can be switched to one of the connection destinations. The above-described contents similarly apply to the optical switches 164, 165, and 166 provided on the downstream side.

The optical switch 167 is connected to the multiplexing-demultiplexing device 120 and the optical switches 163 and 166. In the optical switch 167, an output destination of signal light input from the multiplexing-demultiplexing device 120 can be switched to one of the optical switches 163 and 166.

The optical coupler 132 is connected to the multiplexing-demultiplexing device 120 and the optical switches 161 and 164. The optical coupler 133 is connected to the multiplexing-demultiplexing device 120 and the optical switches 162 and 165. The optical couplers 132 and 133 output input signal light to the multiplexing-demultiplexing device 120.

FIG. 16 illustrates a configuration when neither of the WSSs 110 and 111 malfunctions. Upstream part and downstream part of this configurations example are both similar to that in FIG. 5 illustrated in the second example embodiment, and thus, detailed description thereof is omitted.

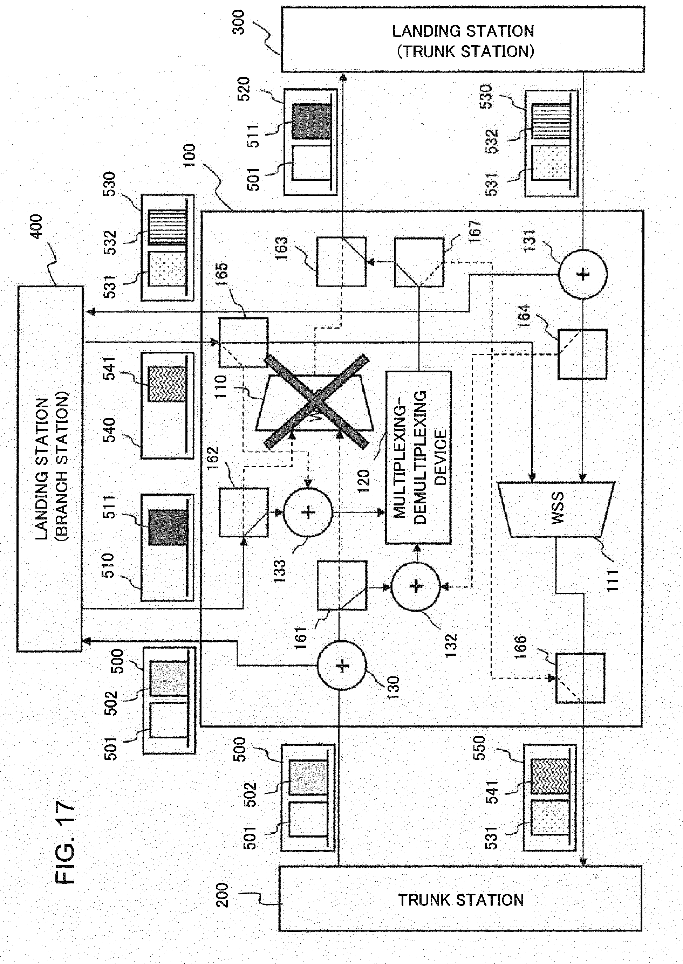

FIG. 17 illustrates a configuration in which the first signal light 500 and the second signal light 510 on the upstream side are input to the multiplexing-demultiplexing device 120 when the WSS 110 provided on the upstream-side path malfunctions. As compared with FIG. 16, the optical switches 161, 162, and 163 have been switched. In the optical switches 161 and 162, output destinations of signal light have been switched to the optical couplers 132 and 133, respectively. In the optical switch 163, an input source of signal light has been switched to the optical switch 167. In the optical switch 167, an output destination of signal light is set to the optical switch 163.

The first signal light 500 and the second signal light 510 are input to the multiplexing-demultiplexing device 120. The multiplexing-demultiplexing device 120 multiplexes and demultiplexes the input first signal light 500 and second signal light 510 by a predetermined wavelength band. As a result, the multiplexing-demultiplexing device 120 outputs the third signal light 520 to the optical switch 167.

The optical switch 167 outputs, to the optical switch 163, the signal light 520 input from the multiplexing-demultiplexing device 120. Thereby, signal light input from the upstream side can be output to the upstream side.

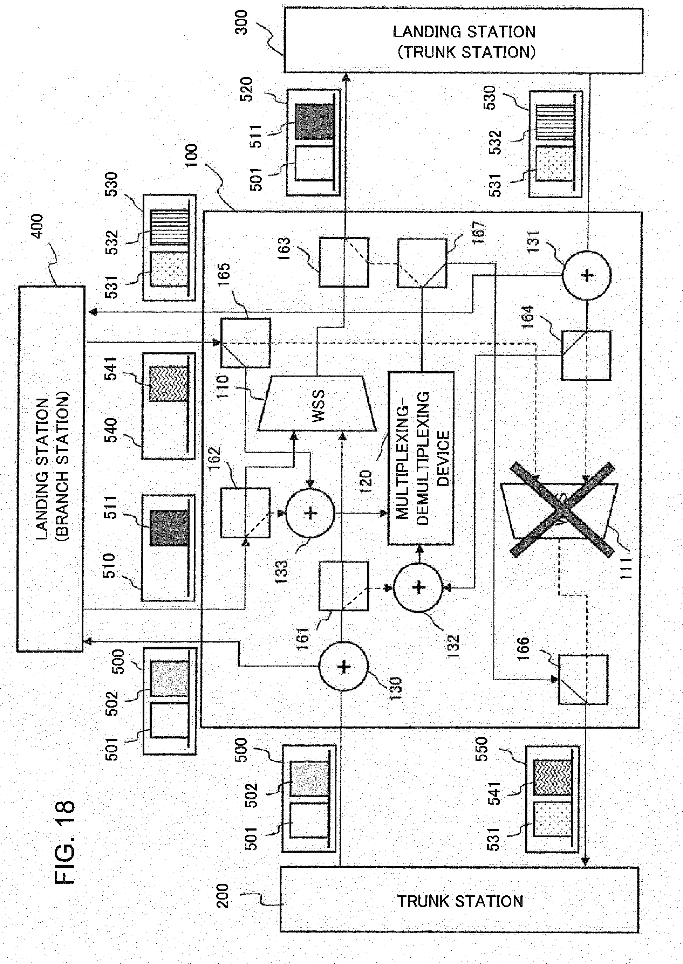

FIG. 18 illustrates a configuration in which the first signal light 530 and the second signal light 540 on the downstream side are input to the multiplexing-demultiplexing device 120 when the WSS 111 provided on the downstream-side path malfunctions. As compared with FIG. 16, the optical switches 164, 165, 166, and 167 have been switched. In the optical switches 164 and 165, output destinations of signal light have been switched to the optical couplers 132 and 133, respectively. In the optical switch 166, an input source of signal light has been switched to the optical switch 167. In the optical switch 167, an output destination of signal light has been switched to the optical switch 166.

The first signal light 530 and the second signal light 540 are input to the multiplexing-demultiplexing device 120. The multiplexing-demultiplexing device 120 multiplexes and demultiplexes the input first signal light 530 and second signal light 540 by the predetermined wavelength band. As a result, the multiplexing-demultiplexing device 120 outputs third signal light 550 to the optical switch 167.

The optical switch 167 outputs, to the optical switch 166, the signal light 550 input from the multiplexing-demultiplexing device 120. Thereby, signal light from the downstream side can be output to the downstream side.

### [Operation]

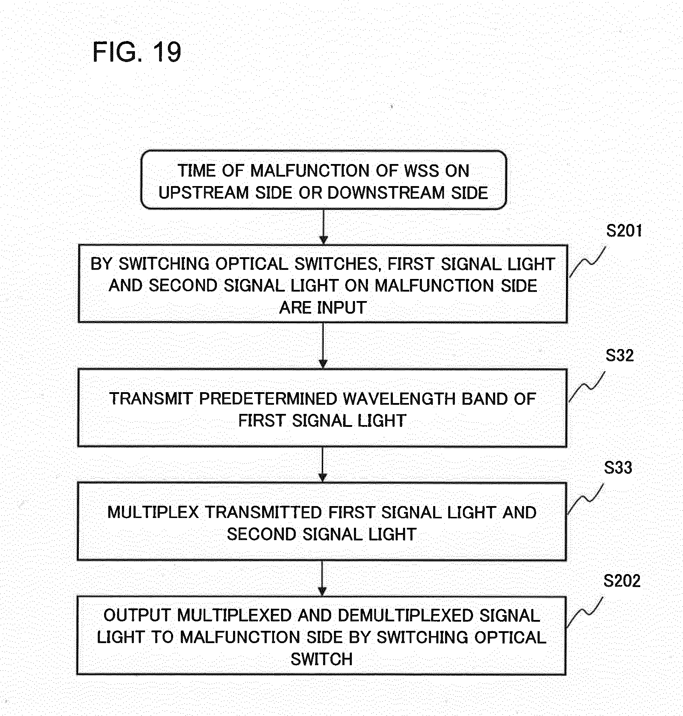

An operation of the optical transmission device 100 is described by using a flowchart in FIG. 19. FIG. 19 illustrates an operation of the optical transmission device 100 when the WSS 110 on the upstream side or the WSS 111 on the downstream side malfunctions.

By switching the optical switches, the first signal light and the second signal light on the malfunction side are input (S201).

After the first signal light and the second signal light on the malfunction side are input to the multiplexing-demultiplexing device, the multiplexing-demultiplexing device transmits a predetermined wavelength band of the first signal light (S32), and multiplexes the transmitted first signal light and the second signal light (S33).

By switching the optical switch, the multiplexed and demultiplexed signal light is output to the malfunction side (S202).

### [Advantageous Effect]

As described above, according to the fourth example embodiment, by switching the optical switches, an input destination of signal light can be changed to the multiplexing-demultiplexing device when the WSS malfunctions. The multiplexing-demultiplexing device is an input destination of signal light on each of the upstream side and the downstream side. With this configuration, a structure of the entire optical transmission device can be simplified one in which the number of components is smaller than that in the case where the multiplexing-demultiplexing device is provided as a switching input destination on each of the upstream side and the downstream side.

Although the present invention is described above with reference to the example embodiments, the present invention is not limited to the above-described example embodiments. Various modifications that can be understood by those skilled in the art can be made on a configuration and details of the present invention within the scope of the present invention.

Note that in each of the example embodiments, it is assumed that the second signal light includes only the band signal in the second wavelength band, but a dummy signal may be included in the first wavelength band. In that case, the multiplexing-demultiplexing device can block the dummy signal.

Further, in each of the example embodiments, for simplicity of description, it is assumed that the predetermined wavelength band transmitted through the multiplexing-demultiplexing device corresponds to an arbitrary wavelength band by which the WSS performs multiplexing and demultiplexing. However, even when a predetermined wavelength band of the multiplexing-demultiplexing device does not correspond to an arbitrary wavelength band of the WSS, the first signal light and the second signal light can be input to the multiplexing-demultiplexing device. At this time, the signal light input to the multiplexing-demultiplexing device is multiplexed and demultiplexed by the predetermined wavelength band that does not correspond to an arbitrary wavelength band of the WSS, but is output without disconnection.

This application claims priority based on Japanese Patent Application No. 2016-235494 filed on December 5, 2016, the disclosure of which is incorporated herein in its entirety.

### [Reference signs List]

- 100: Optical transmission device
- 200, 300: Landing station (trunk station)
- 400: Landing station (branch station)
- 110, 111: WSS
- 120, 121, 122: Multiplexing-demultiplexing device
- 123: Through-fiber
- 500, 530, 600: First signal light
- 510, 540, 610: Second signal light
- 520, 550, 620: Third signal light
- 501, 531, 601: Band signal of first wavelength band
- 502, 511, 532, 541, 602, 611: Band signal of second wavelength band
- 130 to 133: Optical coupler
- 141 to 143, 151 to 153, 161 to 167: Optical switch
- 1201: Demultiplexing unit
- 1202: Multiplexing unit

## Claims

1. An optical transmission device comprising:
an optical add/drop multiplexing means for multiplexing and demultiplexing arbitrary wavelengths of first signal light and second signal light to be input and outputting resultant signal light; and
a multiplexing-demultiplexing means configured to be a switching destination of input of the first signal light and the second signal light, wherein
the multiplexing-demultiplexing means transmits a predetermined wavelength band of the first signal light, multiplexes the transmitted first signal light and the second signal light, and outputs resultant signal light.

2. The optical transmission device according to claim 1, wherein
the multiplexing-demultiplexing means includes a demultiplexing unit that transmits the predetermined wavelength band of the first signal light, and a multiplexing unit that multiplexes the transmitted first signal light and the second signal light.

3. The optical transmission device according to claim 1 or 2, wherein
a plurality of the multiplexing-demultiplexing means is included, the plurality of the multiplexing-demultiplexing means respectively transmitting predetermined wavelength bands different from one another.

4. The optical transmission device according to claim 3, wherein
the switching destination of input of the first signal light and the second signal light is selected from among the plurality of the multiplexing-demultiplexing means.

5. The optical transmission device according to any one of claims 1 to 4, wherein
the multiplexing-demultiplexing means is a common switching destination of signal light input from an upstream side and signal light input from a downstream side.

6. The optical transmission device according to any one of claims 1 to 4, further comprising
an optical switch configured to switch an input destination of the first signal light and the second signal light.

7. The optical transmission device according to any one of claims 1 to 5, wherein an output destination of the first signal light and the second signal light is switched in response to an instruction from control means that detects a malfunction of the optical add/drop multiplexing means.

8. An optical transmission method comprising:
switching an input destination of first signal light and second signal light from an optical add/drop multiplexing means to a multiplexing-demultiplexing means;
transmitting a predetermined wavelength band of the first signal light;
multiplexing the transmitted first signal light and the second signal light; and
outputting resultant signal light.

9. The optical transmission method according to claim 7, wherein the switching is performed by making selection from among a plurality of the multiplexing-demultiplexing means.

10. The optical transmission method according to claim 7 or 8, further comprising:
switching an input destination of signal light on a side where the optical add/drop multiplexing means malfunctions, out of signal light input from an upstream side and signal light input from a downstream side.
